# EUROPEAN PATENT APPLICATION

(11) **EP 3 340 035 A1**
(43) Date of publication of application: **27.06.2018**
(21) Application number: 17204435.6
(22) Date of filing: 29.11.2017
(51) Int. Cl.: G06F 8/654, H04N 19/00, G09G 5/00

(54) **ELECTRONIC APPARATUS AND METHOD FOR UPDATING FIRMWARE AND SETTINGS OF A DISPLAY APPARATUS**

(30) Priority: 21.12.2016 KR 20160175749
(71) Applicant: Samsung Electronics Co., Ltd., Gyeonggi-do 16677 (KR)
(72) Inventor: HEO, Ju, Gyeonggi-do (KR); KIM, Young-kook, Gyeonggi-do (KR); LEE, Seung-hun, Gyeonggi-do (KR)
(74) Representative: Appleyard Lees IP LLP

(57) **Abstract**

An electronic apparatus is disclosed. The electronic apparatus according to various exemplary embodiments includes a transceiver, and a processor configured to convert a firmware file to update a firmware of the display apparatus into a video signal, convert a setting information file to change a setting of the display apparatus into an audio signal, and control the transceiver to transmit the converted video signal and the converted audio signal to a display apparatus.

## Description

### CROSS-REFERENCE TO RELATED APPLICATIONS

This application claims priority from Korean Patent Application No. 10-2016-0175749, filed on December 21, 2016 in the Korean Intellectual Property Office, the disclosure of which is incorporated herein by reference in its entirety.

### BACKGROUND

### 1. Field

Aspects of the exemplary embodiments relate to an electronic apparatus, a controlling method thereof, and a display apparatus, and more particularly, to an electronic apparatus which may update a firmware and setting information of a display apparatus more effectively, a controlling method thereof, and a display apparatus.

### 2. Description

A display system consisting of a plurality of display apparatuses expresses a video by using the plurality of display apparatuses with the purpose of an advertisement, an entertainment, a sport, a broadcast, and the like.

For example, the display system consisting of a plurality of display apparatuses may be used in an exhibition or the like. The respective display apparatuses of the display system display the same image at the same time or display different images to express one whole image.

As such, if a plurality of display apparatuses are used by being connected, the display apparatuses are mostly embedded in a ceiling or a wall which is the hard-to-access location. Here, if the firmware of a plurality of display apparatuses has to be updated or it is needed to change the setting thereof, a person has to directly approach the display apparatus by using a ladder or a lift, connect the USB memory in which a firmware file is stored to the display apparatus, and perform an update. Alternatively, the environment in which a firmware can be upgraded by connecting additional Ethernet networks among the plurality of display apparatuses has to be equipped, but there are many limitations in cost and the like.

In addition, each of the plurality of display apparatuses consisting of a display system generally has the same setting environment. There is inconvenience that if the setting information of the plurality of display apparatuses is changed, each of the plurality if display apparatuses has to be operated separately.

Accordingly, the technology which can upgrade a firmware without an additional USB memory or an Ethernet connection and control the plurality of display apparatuses all at once has been required.

### SUMMARY

An aspect of the exemplary embodiment has been made to provide an electronic apparatus which can update a firmware and change the setting information by using the HDMI or DP signals connected for a loopout function of a display system, the controlling method thereof, and a display apparatus.

According to an exemplary embodiment, there is provided an electronic apparatus including a transceiver, and a processor configured to convert a firmware file to update a firmware of the display apparatus into a video signal, convert a setting information file to change a setting of the display apparatus into an audio signal, and control the transceiver to transmit the converted video signal and the converted audio signal to a display apparatus.

The processor may divide the firmware file and generates a plurality of pieces of divided data of the firmware file, add respective header data to each of the plurality of pieces of divided data of the firmware file, and convert the plurality of pieces of divided data of the firmware file in which the respective header data is added , into the video signal, and the processor divide the setting information file and generates a plurality of pieces of divided data of the setting information file, add respective header data to each of the plurality of pieces of divided data of the setting information file, and convert the plurality of pieces of divided data of the setting information file in which the respective header data is added, into the audio signal.

Each of the respective header data may include at least one of identification (ID) information of the display apparatus, location address information in the display apparatus in which one or more of the plurality of pieces of divided data of the setting information file and the plurality of pieces of divided data of the firmware file are to be stored, cyclical redundancy check (CRC), and a flag which displays a respective last piece of divided data.

A size of the plurality of pieces of divided data of the firmware file may be determined based on a resolution of the display apparatus.

A size of the plurality of pieces of divided data of the setting information file may be determined based on at least one of a sampling rate, a bit rate, and a number of channels.

The transceiver may transmit the converted video signal and the converted audio signal by using a high definition multimedia interface (HDMI) cable or a display port (DP) cable.

The converted video signal may be an RGB signal, and the converted audio signal may be I²S or Sony and Philips digital interface (SPDIF).

According to an exemplary embodiment, there is provided a controlling method of an electronic apparatus including converting a firmware file to update a firmware of a display apparatus which communicates with the electronic apparatus into a video signal, converting a setting information file to change a setting of the display apparatus into an audio signal, and transmitting the converted video signal and the converted audio signal to the display apparatus.

The converting into the video signal may include generating a plurality of pieces of divided data by dividing the firmware file, adding respective header data to each of the plurality of pieces of divided data of the firmware file, and converting the plurality of pieces of divided data of the firmware file, in which the respective header data is added, into the video signal, and the converting into the audio signal may include generating a plurality of pieces of divided data by dividing the setting information file, adding respective header data to each of the plurality of pieces of divided data of the setting information file, and converting the plurality of pieces of divided data of the setting information file, in which the respective header data is added, into the audio signal.

Each of the respective header data may include at least one of identification (ID) information of the display apparatus, location address information in a display apparatus in which one or more of the plurality of pieces of divided data of the setting information file and the plurality of pieces of divided data of the firmware file are to be stored, cyclical redundancy check (CRC), and a flag which displays a respective last piece of divided data.

A size of the plurality of pieces of divided data of the firmware file may be determined based on a resolution of the display apparatus.

A size of the plurality of pieces of divided data of the setting information file may be determined based on at least one of a sampling rate, a bit rate, and the number of channels.

The transmitting may transmit through a HDMI cable or a DP cable.

The converted video signal may be an RGB signal, and the converted audio signal may be I²S or SPDIF.

According to an exemplary embodiment, there is provided a display apparatus including a memory configured to store a firmware and setting information, a transceiver configured to receive a video signal and an audio signal from an electronic apparatus, and a processor configured to control a display to display a video corresponding to the received video signal, and to control an audio output device to output a sound corresponding to the received audio signal, and the processor, in response to receiving an update command with regard to the firmware and the setting information, may update the firmware and the setting information stored in the memory based on the received video signal and the received audio signal.

The received video signal may include a plurality of pieces of divided data generated by dividing information of the firmware, and respective header data added to each of the plurality of pieces of divided data of the information of the firmware, and the received audio signal may include a plurality of pieces of divided data generated by dividing the setting information, and respective header data added to each of the plurality of pieces of divided data of the setting information file.

Each of the respective header data may include at least one of ID information of the display apparatus, location address information in the display apparatus in which one or more of the plurality of pieces of divided data of the setting information and the plurality of pieces of divided data of the information of the firmware are to be stored, CRC, and a flag which displays a last piece of divided data, and the processor may store the plurality of pieces of divided data of the setting information and the plurality of pieces of divided data of the information of the firmware in the memory based on the location address information, and update the firmware and the setting information stored in the memory.

The processor may update setting information stored in the memory by using divided data corresponding to the ID information of the display apparatus among a plurality of pieces of divided data generated by dividing the setting information file.

The transceiver may transmit the received video signal and the received audio signal to another display apparatus.

The processor, in response to receiving an update command with regard to the firmware and the setting information, may update a firmware and setting information stored in the memory based on the received video signal and the received audio signal.

### BRIEF DESCRIPTION OF THE DRAWINGS

FIG. 1 is a view briefly illustrating a display system consisting of a plurality of display apparatuses according to an exemplary embodiment;
FIG. 2 is a block diagram illustrating a composition of an electronic apparatus according to an exemplary embodiment;
FIG. 3 is a block diagram illustrating a composition of a display apparatus according to an exemplary embodiment;
FIG. 4 is a view illustrating a file converting process of an electronic apparatus according to an exemplary embodiment;
FIG. 5 is a view illustrating a method to decide a size of transmission data of a firmware file and setting information according to an exemplary embodiment;
FIG. 6 is a view illustrating a signal processing process of a display apparatus according to an exemplary embodiment;
FIG. 7 is a view illustrating a method for updating a firmware of a display apparatus and a method for changing setting information of the display apparatus according to an exemplary embodiment;
FIG. 8 is a flow chart illustrating a file converting method of an electronic apparatus according to an exemplary embodiment; and
FIG. 9 is a flow chart illustrating a signal processing method of a display apparatus according to an exemplary embodiment.

### DETAILED DESCRIPTION

The terms used in example embodiments will be briefly explained, and example embodiments will be described in greater detail with reference to the accompanying drawings.

Terms used in the present disclosure are selected as general terminologies currently widely used in consideration of the configuration and functions of the present disclosure, but can be different depending on intention of those skilled in the art, a precedent, appearance of new technologies, and the like. Further, in specific cases, terms may be arbitrarily selected. In this case, the meaning of the terms will be described in the description of the corresponding embodiments. Accordingly, the terms used in the description should not necessarily be construed as simple names of the terms, but be defined based on meanings of the terms and overall contents of the present disclosure.

The example embodiments may vary, and may be provided in different example embodiments. Various example embodiments will be described with reference to accompanying drawings. However, this is not intended to limit the scope to an exemplary embodiment, and therefore, it should be understood that all the modifications, equivalents or substitutes included under the invented spirit and technical scope are encompassed. In describing the exemplary embodiments, well-known functions or constructions are not described in detail since they would obscure the specification with unnecessary detail.

The terms such as "first," "second," and so on may be used to describe a variety of elements, but the elements should not be limited by these terms. The terms are used simply to distinguish one element from other elements.

Singular forms are intended to include plural forms unless the context clearly indicates otherwise. In the present application, the terms "include" and "comprise" designate the presence of features, numbers, steps, operations, components, elements, or a combination thereof that are written in the specification, but do not exclude the presence or possibility of addition of one or more other features, numbers, steps, operations, components, elements, or a combination thereof.

In an example embodiment, 'a module' or 'a unit' performs at least one function or operation, and may be realized as hardware (e.g., circuitry), firmware, software, or combination thereof. In addition, a plurality of 'modules' or 'units' may be integrated into at least one module and may be realized as at least one processor in an integrated manner except for 'modules' or 'units' that should be realized in specific hardware.

The example embodiments of the disclosure will be described in greater detail below in a manner that will be understood by one of ordinary skill in the art. However, exemplary embodiments may be realized in a variety of different configurations, and not limited to descriptions provided herein. Also, well-known functions or constructions are not described in detail since they would obscure the invention with unnecessary detail.

Hereinafter, exemplary embodiments will be described in detail with reference to accompanying drawings.

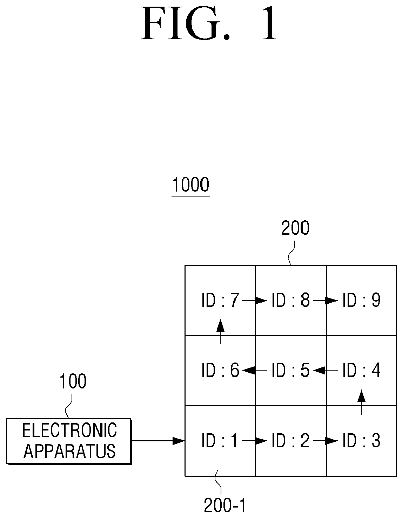

FIG. 1 is a view briefly illustrating a display system consisting of a plurality of display apparatuses according to an exemplary embodiment.

Referring to FIG. 1, a display system 1000 includes an electronic apparatus 100 and a plurality of display apparatuses 200. Here, each of the plurality of display apparatuses 200 may have an ID divided from other display apparatuses. The value 1 is provided as an ID value to the display apparatus that receives data from the electronic apparatus 100, among the plurality of display apparatuses 200, and the display apparatus having the ID value of 1 may be called as a first display apparatus 200-1.

The electronic apparatus 100 may be implemented as various types of apparatuses such as a personal computer (PC), a laptop PC, a cellular phone, a tablet PC, a personal digital assistant (PDA), a MPEG audio layer-3 (MP3) player, a kiosk, a digital photo frame, a set-top box, a distributor, or the like. When the electronic apparatus 100 is implemented as a portable-type device such as a mobile phone, a tablet PC, a PDA, an MP3 player, a laptop PC, and the like, the electronic apparatus 100 may be called a mobile device, but it will be described as an electronic apparatus as a whole in the exemplary embodiments.

Specifically, the electronic apparatus 100 may transmit a video signal and an audio signal to the plurality of display apparatuses 200. Here, the electronic apparatus 100 may transmit the video signal and the audio signal to the plurality of display apparatuses 200 through a HDMI cable or a DP cable.

Here, the display apparatus 100 may convert a new firmware file for upgrading the firmware pre-stored in the plurality of display apparatuses 200 into a video signal, convert a setting information (configuration) file for changing the setting of the plurality of display apparatuses 200 into an audio signal, and transmit the converted video signal and audio signal to the plurality of display apparatuses 200.

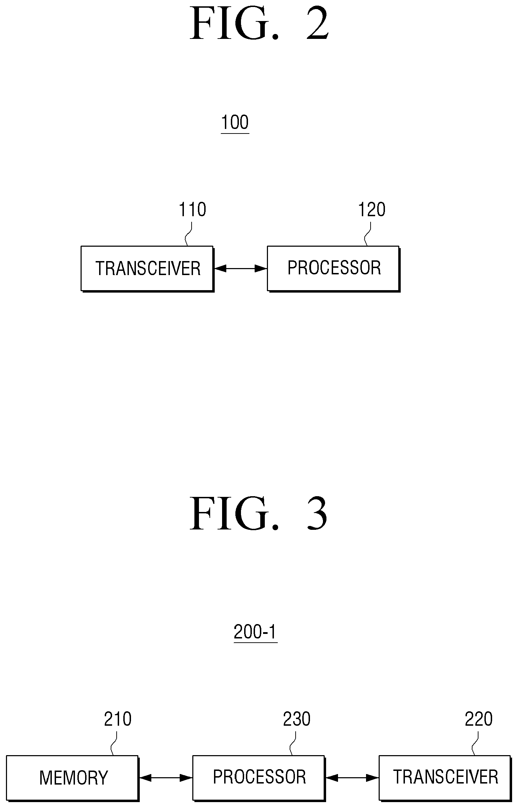

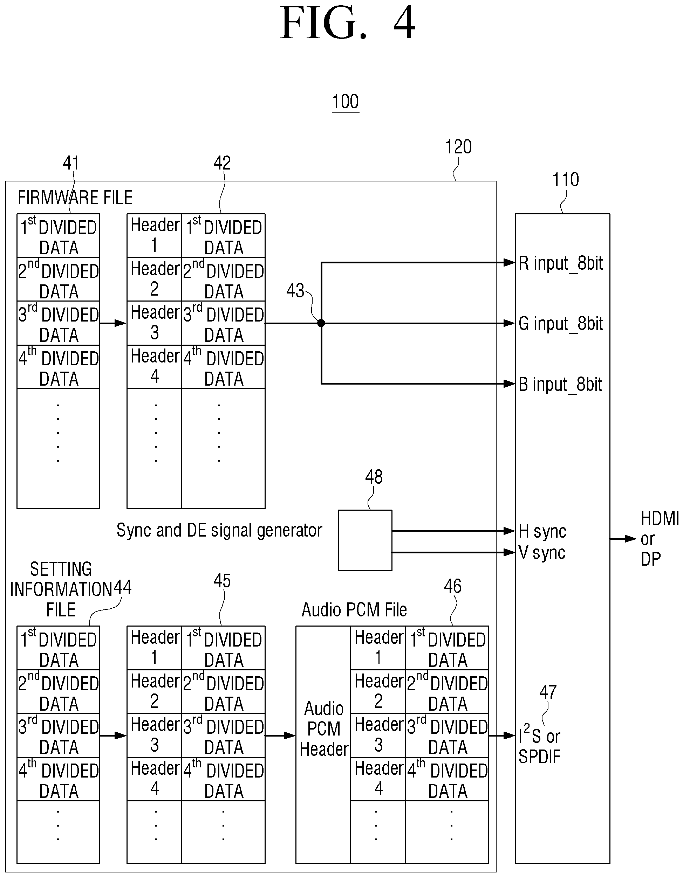

Meanwhile, the detailed configuration and operation of the electronic apparatus 100 will be described in detail with reference to FIGS. 2 and 4 below.

The plurality of display apparatuses 200 may be the apparatuses such as a TV, a smart TV, a kiosk, a digital photo frame, a tablet PC, a monitor etc. which can receive and transmit a video signal and an audio signal.

The first display apparatus 200-1 to which 1 is added as an ID value among the plurality of display apparatuses 200 may receive a video signal and an audio signal from the electronic apparatus 100. In addition, the first display apparatus 200-1 may transmit the received video signal and audio signal to the display apparatus of which an ID value is 2 so that the video signal and the audio signal are transmitted to other display apparatuses sequentially.

The detailed configuration and operation of the plurality of display apparatuses 200 that includes the first display apparatus 200-1 will be described in detail below with reference to FIGS. 3, 6 and 7.

For convenience in explanation, it has been described in the exemplary embodiment that a signal is transmitted from the electronic apparatus 100 to the first display apparatus 200-1, and the signal is transmitted sequentially from the first display apparatus 200-1 to other display apparatuses based on the ID value, but in the implementation, the electronic apparatus 100 is connected to each of the plurality of display apparatuses 200, and the signal may be directly transmitted from the electronic apparatus 100 to the plurality of display apparatuses 200.

For convenience in explanation, it has been described in the exemplary embodiment that the ID value is assigned according to the order that the video signal and the audio signal are transmitted, but in the implementation, the ID value may be assigned according to the arrangement order and the like regardless of the signal transmission order.

For convenience in explanation, it has been described in the exemplary embodiment that the plurality of display apparatuses 200 consist of nine display apparatuses arranged in 3x3 formation, but in the implementation, the plurality of display apparatuses 200 may be implemented with less than 9 or more than 9 display apparatuses or the number of the plurality of display apparatuses 200 may be one.

FIG. 2 is a block diagram illustrating a composition of an electronic apparatus according to an exemplary embodiment.

Referring to FIG. 2, the electronic apparatus 100 may include a transceiver 110 and a processor 120. The transceiver 110 may communicate with a display apparatus. Specifically, the transceiver 110 may transmit a video signal and an audio signal to the display apparatus. Here, the transceiver 110 may transmit the video signal and the audio signal to more than one display apparatuses.

In addition, the transceiver 110 may receive the video signal and the audio signal to be displayed on the display apparatus, a firmware file to upgrade the firmware of the display apparatus, and a setting information file to change the setting of the display apparatus, from an external apparatus. Here, the external apparatus may include the manufacturer of the display apparatus or the server of a broadcasting station etc.

The transceiver 110 may operate as a wired method using at least one of HDMI, DP, Digital Visual Interface (DVI), RGB, DSUB, Super Video (S-Video), Component Video, and Composite Video which are connection ports included in the electronic apparatus 100. The transceiver 110 may operate as a wireless communication method such as Global System for Mobile communication (GSM), Universal Mobile Telecommunications System (UMTS), Long Term Evolution (LTE), Wireless Broadband Internet (WiBRO), and Wireless Fidelity (WiFi), Bluetooth in addition to the wired method.

The processor 120 may control each composition of the electronic apparatus 100. In detail, the processor 120 may convert the new firmware file to update the firmware of the display apparatus into a video signal, and convert the setting information file to change the setting of the display apparatus into an audio signal. Here, the new firmware file may be for updating the firmware pre-installed in the display apparatus, or for updating the firmware pre-stored in the display apparatus which is not yet installed. Meanwhile, the firmware file and the setting information file may be stored in the electronic apparatus 100 or received from an outside through the transceiver 110.

Specifically, the processor 120 may generate a plurality of pieces of divided data by dividing the new firmware file, add the header data to each of the plurality of pieces of divided data which are generated, and convert the plurality of pieces of divided data in which the header data is added respectively, into a video signal.

Here, the video signal may be an RGB signal. However, it is not limited thereto, and the processor 120 may convert the plurality of pieces of divided data which are generated by dividing a firmware file, into another video signal which may be transmitted to the display apparatus. In addition, the size of the divided data which is converted into the video signal may be determined based on the resolution of the display apparatus.

In addition, the processor 120 may generate a plurality of pieces of divided data by dividing the setting information file, add the header data to each of the generated plurality of pieces of divided data, and convert the plurality of pieces of divided data in which the header data is added respectively, into an audio signal.

Here, the audio signal may be I²S or Sony and Philips digital interface (SPDIF). However, it is not limited thereto, and the processor 120 may convert the divided data which is generated by dividing a setting information file, into another audio signal which may be transmitted to the display apparatus. In addition, the size of the divided data which is converted into the audio signal may be determined based on at least one of a sampling rate, a bit rate, and the number of channels.

Here, each of the header data added to the divided data may include at least one of ID information of a display apparatus, location address information in a display apparatus in which the plurality of pieces of divided data are to be stored, CRC, and a flag which displays the last piece of the divided data.

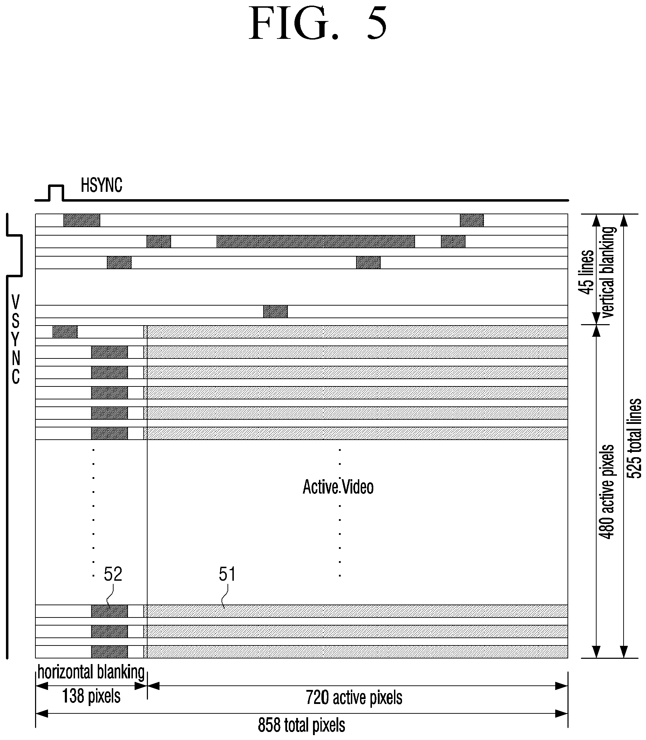

In addition, the processor 120 may control the transceiver 110 to transmit the converted video signal and the converted audio signal to the display apparatus. Meanwhile, the method for converting the firmware file and the setting information file into the video signal and the audio signal and transmitting the converted video signal and audio signal will be described in detail with reference to FIGS. 4 and 5.

Although not illustrated in FIG. 2, the electronic apparatus 100 may further include an input unit such as a memory, a display, a camera, a microphone etc., and a video processor, an audio processor, a speaker, a user interface etc. in addition to the transceiver 110 and the processor 120.

According to the exemplary embodiment described above, there is an effect that a user convenience is increased and limitations such as a cost etc. are overcome by converting a firmware file into a video signal and a setting information file into an audio signal, and transmitting the firmware file and the setting information file to the display apparatuses respectively through the loop of the plurality of display apparatuses connected through a HDMI cable or a DP cable.

FIG. 3 is a block diagram illustrating a composition of a display apparatus according to an exemplary embodiment. Specifically, the display apparatus 200-1 of FIG. 3 is a first display apparatus receiving data from an electronic apparatus among the plurality of display apparatuses of FIG. 1, and the configuration and operation of the display apparatuses other than the firs display apparatus are the same as that of the first display apparatus, and thus a repeated description thereof will be omitted. Hereinafter, the first display apparatus and the other display apparatuses will not be divided and called as a 'display apparatus'.

Referring to FIG. 3, the display apparatus 200-1 may include a memory 210, a transceiver 220 and a processor 230.

The memory 210 may store all sorts of programs and data needed for the operation of the display apparatus 200. The memory 210 may be implemented as non-volatile memory, volatile memory, flash memory, hard disk drive (HDD) or solid state drive (SSD). The memory 210 may be accessed by the processor 230 and may read/record/correct/delete/update data under the control of the processor 230. The term memory used in the exemplary embodiment may include a memory card (not illustrated) (for example, a micro SD card, a memory stick) mounted in a memory 210 or in the display apparatus 200.

Specifically, the memory 210 may store the firmware and setting information of the display apparatus 200-1. In addition, the memory 210 may update an existing firmware file by storing a new firmware file under the control of the processor 230, and change the existing setting information by storing new setting information.

The transceiver 220 may operate as a wired method using at least one of HDMI, DP, DVI, RGB, DSUB, S-Video, Component Video, and Composite Video which are connection ports included in the display apparatus 200-1. The transceiver 220 may operate as a wireless communication method such as GSM, UMTS, LTE, WiBRO, WiFi, Bluetooth in addition to the wired method. Desirably, the display apparatus 200-1 may use HDMI or DP cable.

Specifically, the transceiver 220 may receive a video signal and an audio signal from an electronic apparatus. Meanwhile, according to the arrangement form of the display apparatus 200-1, the transceiver 220 may receive the video signal and an audio signal from another display apparatus. Here, the transceiver 220 may receive a firmware update and a setting information change commands according to an operation method of the display apparatus 200-1.

The transceiver 220 may transmit the received video signal and audio signal to another display apparatus.

The processor 230 may control each configuration of the display apparatus 200. Specifically, if the processor 230 receives an update command regarding the stored firmware and setting information, the processor 230 may update the firmware stored in the memory by using the video signal and audio signal received through the transceiver 220, and change the setting information. Here, although not illustrated, the processor 230 may receive an update command of a user through the input unit included in the display apparatus 200-1. For example, the processor 230 may receive an update command through the input unit such as a remote controller, a mouse, a keyboard, a touch screen, a microphone for receiving an audio, a capturing unit for a motion input, etc.

Specifically, the processor 230 may convert the received video signal into the divided data which is generated by dividing a firmware file and header data added to the divided data. In addition, the processor 230 may store the converted divided data in the memory 210 based on the converted header data.

In addition, the processor 230 may convert the received audio signal into the divided data which is generated by dividing a setting information file and the header data added to the divided data. In addition, the processor 230 may store the converted divided data in the memory 210 based on the converted header data.

Here, each header data may include at least one of ID information of a display apparatus, location address information in a display apparatus in which the plurality of pieces of divided data are to be stored, CRC, and a flag which displays the last piece of divided data.

Specifically, the processor 230 may update the setting information stored in the memory 210 by using the divided data corresponding to the display apparatus 200-1 among the plurality of pieces of divided data generated by dividing the setting information obtained by converting an audio signal. Here, the processor 230 may use the divided data of the setting information corresponding to the display apparatus 200-1 based on the ID information of the display apparatus included in the header data.

If the update command of a user is not input, the processor 230 may process the video information received from the transceiver 220 and output the processed video information to a display (not illustrated), and process the received audio information and output the processed audio information to an audio output unit (not illustrated). Here, the audio output unit may be the terminal connected to more than one speakers included in the display apparatus 200-1, an external speaker or an earphone in a wired manner, or a wireless connection network such as Bluetooth and Wi-Fi connected to an external speaker or earphone in a wireless manner.

The processor 230 may determine whether the received video signal and audio signal are the information for an update, based on the header data respectively added to the divided data which is generated by dividing the firmware file and to the divided data generated by dividing the setting information. In this case, if the received video signal and audio signal are the information for an update, the processor 230 may store the received video signal and audio signal in the memory 210, and if the received video signal and audio signal are not the information for an update, the processor 230 may process the video signal and transmit the processed video signal to a display (not illustrated), and process the audio signal and transmit the processed audio signal to an audio output unit (not illustrated).

Meanwhile, the processor 230 may divide the memory 210 into more than two portions, store the new firmware file and new setting information in the second portion which is separated from the first portion in which the existing firmware file and setting information are stored, and use the stored new firmware file and new setting information. Subsequently, if the firmware file and the setting information are updated again, the processor 230 may store the updated firmware file and the setting information in the first portion which is divided from the second portion in which the firmware file and setting information currently used are stored, or in another portion, and use the updated firmware file and setting information.

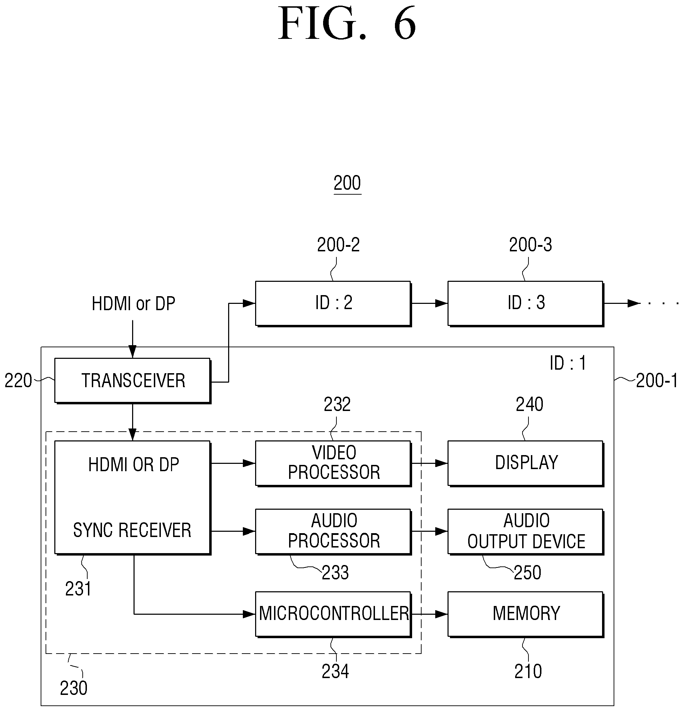

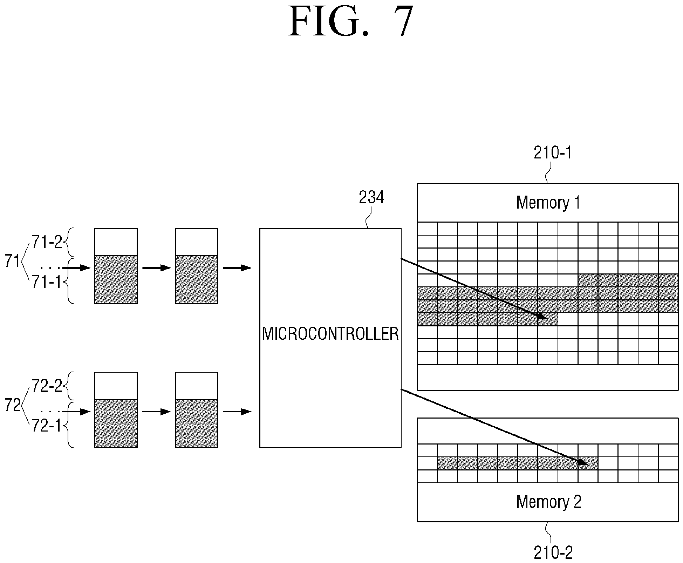

The signal processing method of the display apparatus 200-1 will be described in detail with reference to FIGS. 6 and 7.

According to the exemplary embodiment described above, there is an effect that a user convenience is increased and limitations such as a cost etc. are overcome by converting a firmware file into a video signal and a setting information file into an audio signal, and transmitting the firmware file and the setting information file to the display apparatuses respectively through the loop of the plurality of display apparatuses connected through a HDMI cable or a DP cable.

FIG. 4 is a view illustrating a file converting process of an electronic apparatus according to an exemplary embodiment.

Referring to FIG. 4, the electronic apparatus 100 may include the transceiver 110 and the processor 120. The processor 120 may generate a plurality of pieces of divided data 41 by dividing the firmware file. Here, the firmware file may be stored in the electronic apparatus 100 or received from an external apparatus through the transceiver 110. In addition, the processor 120 may add the header data to the generated plurality of pieces of divided data respectively. Here, each of the header data may include at least one of the ID information of a display apparatus, the location address information in a display apparatus in which the plurality of pieces of divided data are to be stored, CRC, and the flag which displays the last piece of divided data.

In addition, the processor 120 may convert the divided data 42 in which the header data is added, into a video signal 43. Specifically, the converted video signal may be an RGB signal. In addition, the processor 120 may transmit the converted video signal 43 to the transceiver 110 to transmit to the display apparatus.

The processor 120 may generate a plurality of pieces of divided data by dividing the setting information file. Here, the setting information file may be stored in the memory of the electronic apparatus 100 or received from an external apparatus through the transceiver 110. In addition, the processor 120 may add the header data to the generated plurality of pieces of divided data respectively.

In addition, in order to convert the divided data 45 in which the header data is added into the audio signal 47, the processor 120 may generate an audio PCM file 46 by adding audio PCM header data to the divided data in which the header data is added. Subsequently, the processor 120 may convert the audio PCM file 46 into the audio signal 47. Specifically, the converted audio signal may be I²S or SPDIF. In addition, the processor 120 may transmit the converted audio signal 47 to the transceiver 110 to transmit to the display apparatus.

Meanwhile, the processor 120 may further include a sync and DE signal generator 48. Here, the processor 120 may generate Hsync and Vsync which are timing signal, and transmit the generated Hsync, Vsync with the RGB signal which is a video signal to the transceiver 110. The configurations of the Hsync and Vsync will be described in detail with reference to FIG. 5.

The transceiver 110 may transmit the video signal 43, the audio signal 47, the Hsync and Vsync transmitted from the processor 120 to the display apparatus by using a HDMI cable or a DP cable.

According to the exemplary embodiment described above, there is an effect that a user convenience is increased and limitations such as a cost etc. are overcome by converting a firmware file into a video signal and a setting information file into an audio signal, and transmitting the firmware file and the setting information file to the display apparatuses respectively through the loop of the plurality of display apparatuses connected through a HDMI cable or a DP cable.

FIG. 5 is a view illustrating a method for deciding the size of transmission data of a firmware file and setting information according to an exemplary embodiment. Specifically, FIG. 5 illustrates Hsync and Vsync of one frame which is transmitted. Here, the Hsync and Vsync may include a data island 52 which includes a video signal 51 and an audio signal.

An electronic apparatus may determine the transmission size and transmission quantity of a firmware file based on the Hsync and Vsync. Specifically, the Hsync and Vsync may be set based on the resolution of the display apparatus. For example, if an electronic apparatus plans to transmit the video signal including a firmware file to the display apparatus having the resolution of 720 x 480, the electronic apparatus may set the Hsync and Vsync as the timing of 720 x 480, and set the size of the transmission data as 720 x 480 x 3 byte (= 1036.8Kbyte) which is the size of the video area of one frame. On this basis, the electronic apparatus may divide the firmware file into a plurality of pieces of divided data having 1036.8Kbyte respectively.

It has been described that the display apparatus has the resolution of 720 x 480, but in the implementation, the size of the transmission data may vary according to the resolution of the display apparatus.

Meanwhile, the electronic apparatus may determine the size of the transmission data and the transmission quantity of a setting information file based on at least one of a sampling rate, a bit rate, and the number of channels of the audio signal generated by converting the setting information file.

For example, if the setting information file is converted into an audio signal with 44.1kHz, 16bit, and two channels stereo, the audio signal of 44100 x 16 bit x 2(=176.4Kbyte) size may be transmitted for one second, and thus, the electronic apparatus may determine this size as the size of the transmission data.

In addition, the electronic apparatus may transmit the audio signal to the display apparatus by using the Hsync and Vsync. Meanwhile, in the implementation, the size of the transmission data of the audio signal is not limited to the sampling rate, the bit rate, and the number of channels, and may vary.

FIG. 6 is a view illustrating a signal processing process of a display apparatus according to an exemplary embodiment.

Referring to FIG. 6, a plurality of display apparatuses 200 may include the first display apparatus 200-1 of which ID value is 1, the second display apparatus 200-2 of which ID value is 2, the third display apparatus 200-3 of which ID value is 3 and many display apparatuses. Here, the configurations and operations of the second display apparatus 200-2, the third display apparatus 200-3 and many display apparatuses are substantially identical to the configuration and operation of the first display apparatus 200-1, and thus the repeated description thereof will be omitted.

The first display apparatus 200-1 may include a memory 210, a transceiver 220, a processor 230, a display 240 and an audio output unit 250.

The transceiver may receive the video signal and the audio signal by using the HDMI cable or the DP cable from an external apparatus. In addition, the transceiver 220 may transmit the received video signal and audio signal to the second display apparatus 200-2. Accordingly, the same video signal and audio signal may be transmitted to all of the plurality of display apparatuses 200.

In addition, the processor 230 may convert the video signal and the audio signal received through the transceiver 220 and output the converted video signal and audio signal through the display 240 or the audio output unit 250, or store the converted video signal and audio signal in the memory 210 so as to update a firmware and setting information.

Specifically, the processor 230 may include a HDMI or DP sync receiver 231, a video processor 232, an audio processor 233, and a microcontroller(micom) 234.

The HDMI or DP sync receiver 231 may convert the video signal received with the HDMI cable or the DP cable into the plurality of pieces of divided data which are generated by dividing the firmware file, and convert the received audio signal into the plurality of pieces of divided data which are generated by dividing the setting information.

Although not illustrated, if user's firmware and setting information update command is received through the input unit provided in the first display apparatus 200-1, the plurality of pieces of converted divided data may be transmitted to the microcontroller 234.

In addition, the microcontroller 234 may store the plurality of pieces of converted divided data in the memory 210, and update the firmware and the setting information. The method for updating the firmware and the setting information will be described in detail with reference to FIG. 7 below.

On the other hand, if the video signal and the audio signal are received in the state in which the update command is not received, the HDMI or DP sync receiver 231 may transmit the video signal to the video processor 232, and transmit the audio signal to the audio processor 233.

Accordingly, the video processor 232 processes the video signal, and transmit the processed video signal to the display 240 so that the display 240 displays the processed video signal.

In addition, the audio processor 233 processes the audio signal, and transmit the processed audio signal to the audio output unit 250 so that the audio output unit 250 outputs the processed audio signal.

Meanwhile, the HDMI or DP sync receiver 231, the video processor 232, the audio processor 233, and the microcontroller 234 have been illustrated in FIG. 6 as separate configurations, but in the implementation, all functions may be performed in one configuration, or the combination of more than two configurations which can perform more than one function may be provided.

Especially, if the HDMI or DP sync receiver 231 and the microcontroller 234 have the same configuration, even if the user's update command is not received, the first display apparatus 200-1 may determine that the received video and an audio signals are the firmware and the setting information based on the header data, and store the video and audio signals in the memory 210.

The operation of each of the configurations illustrated in FIG. 6 is the same as the operation of the configurations illustrated in FIG. 3, and thus the repeated description thereof will be omitted.

FIG. 7 is a view illustrating a method for updating a firmware and a method for changing setting information of a display apparatus according to an exemplary embodiment.

Referring to FIG. 7, the microcontroller 234 may receive the video signal 71 and store the video signal 71 in a first memory 210-1. Specifically, the video signal 71 may include the divided data 71-1 generated by dividing the firmware file and the header data 71-2 added to the divided data 71-1.

Here, the header data 71-2 may include at least one of the ID information of a display apparatus, the location address information in a display apparatus in which the plurality of pieces of divided data are to be stored, CRC, and the flag which displays the last piece of divided data.

The microcontroller 234 may store the divided data 71-1 in the first memory 210-1 based on the location address information in the display apparatus in which the divided data 71-1 included in the header data 71-2 is to be stored.

In addition, the microcontroller 234 may receive the audio signal 72 and store the audio signal 72 in the second memory 210-2. Specifically, the audio signal 72 may include the divided data 72-1 generated by dividing the setting information file and the header data 72-2 added to the divided data 72-1.

Here, the header data 72-2 may include at least one of the ID information of a display apparatus, the location address information in the display apparatus in which the plurality of pieces of divided data are to be stored, CRC, and the flag which displays the last piece of divided data.

The microcontroller 234 may store the divided data 72-1 in the second memory 210-2 based on the location address information in the display apparatus in which the divided data 72-1 included in the header data 72-2 is to be stored.

For convenience in explanation, two memories are illustrated in FIG. 7, but in the implementation, one or more than two memories may be provided.

Meanwhile, in FIG. 7, it has been illustrated that the video signal received with the HDMI or DP cables is converted into the plurality of pieces of divided data generated by dividing a firmware file and received audio signal is converted into the plurality of pieces of divided data generated by dividing the setting information, and the microcontroller 234 stores the plurality of pieces of converted divided data in the memories 210-1 and 201-2. However, if the HDMI or DP sync receiver illustrated in FIG. 6 and the microcontroller 234 have the same configuration, the microcontroller 234 may convert the video signal and audio signal received through the HDMI or DP cable into the plurality of pieces of divided data, and store the plurality of pieces of converted divided data in the memories 210-1 and 210-2, in the implementation.

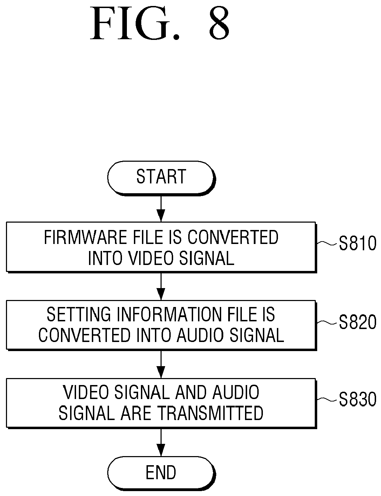

FIG. 8 is a flow chart illustrating a file converting method of an electronic apparatus according to an exemplary embodiment.

Referring to FIG. 8, first, an electronic apparatus may convert a firmware file into a video signal in S810. Specifically, the electronic apparatus divides the new firmware file to update the firmware pre-stored in a display apparatus into a plurality of pieces of divided data, add the header data to each of the plurality of pieces of divided data, and convert the plurality of pieces of divided data to which the header data is added into a video signal. Here, the new firmware file may be the file which is stored in the electronic apparatus or received from an external apparatus.

In addition, the electronic apparatus may convert a setting information file into an audio signal in S820. Specifically, the electronic apparatus may divide the new setting information file to change the setting information of the display apparatus into a plurality of pieces of divided data, add the header data to each of the plurality of pieces of divided data, and convert the plurality of pieces of divided data to which the header data is added into an audio signal. Here, the new setting information file may be the file which is stored in the electronic apparatus or received from an external apparatus according to the setting change command of a user.

Although it has been described that the setting information file is converted into the audio signal after the firmware file is converted into the video signal, in the implementation, the order thereof is not limited and the converting operations may be performed at the same time or the stage of converting the setting information file into the audio signal may be performed first.

Subsequently, the electronic apparatus may transmit the video signal and the audio signal to the display apparatus in S830. Specifically, the electronic apparatus may transmit the video signal generated by converting the new firmware file, and the audio signal generated by converting the setting information file to the display apparatus by using the HDMI cable or the DP cable.

According to the exemplary embodiment described above, there is an effect that a user convenience is increased and limitations such as a cost etc. are overcome by converting a firmware file into a video signal and a setting information file into an audio signal, and transmitting the firmware file and the setting information file to the display apparatuses respectively through the loop of the plurality of display apparatuses connected through a HDMI cable or a DP cable.

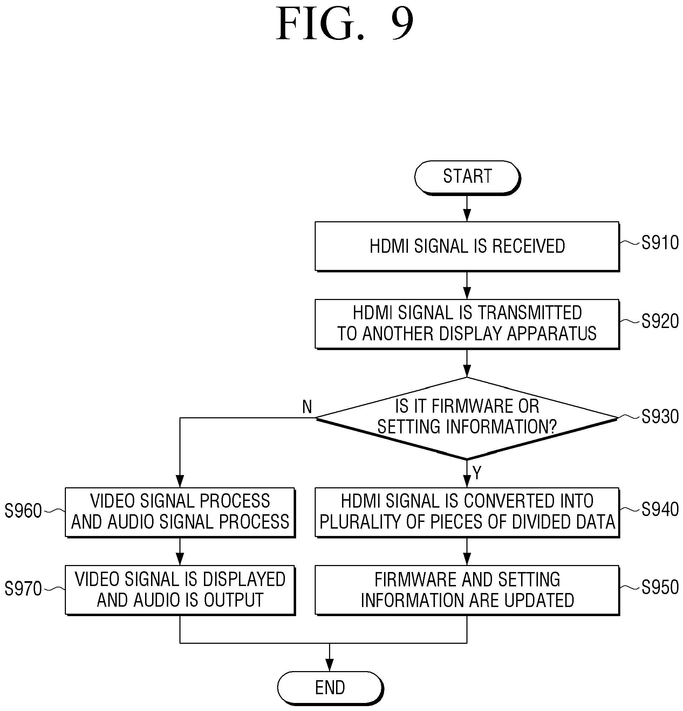

FIG. 9 is a flow chart illustrating a method for processing a signal of a display apparatus according to an exemplary embodiment.

Referring to FIG. 9, the display apparatus may receive an HDMI signal from an electronic apparatus in S910. Here, the received HDMI signal may include a video signal and an audio signal. Alternatively, the display apparatus may receive a DP signal from an electronic apparatus. Subsequently, the display apparatus may transmit the received HDMI signal to another display apparatus in S920. Alternatively, if the DP signal is received from an electronic apparatus, the display apparatus may transmit the received DP signal to another display apparatus.

In the implementation, the display apparatus may transmit the signal which is in a different sort to the received signal to anther display apparatus. Specifically, if the display apparatus has received a DP signal, a DVI signal or an RGB signal, etc., the display apparatus may convert the received signal into an HDMI signal and transmit the converted signal to another display apparatus. Meanwhile, if the display apparatus has received an HDMI signal, a DVI signal, or an RGB signal, etc., the display apparatus may convert the received signal into a DP signal and transmit the converted signal to another display apparatus.

Subsequently, the display apparatus may determine whether the video signal and the audio signal included in the received HDMI signal includes a firmware file and a setting information file in S930. Specifically, the display apparatus may determine that the HDMI signal, which is received after the command to update a firmware and setting information is received from a user, includes the firmware file and the setting information file. Alternatively, the display apparatus may determine whether the received HDMI signal includes the firmware file and the setting information file based on the header data included in the received HDMI signal.

If it is determined that the received HDMI signal includes the firmware file and the setting information file in S930-Y, the display apparatus may convert the received HDMI signal into a plurality of pieces of divided data in S940. Specifically, the video signal included in the HDMI signal may be converted into the plurality of pieces of divided data generated by dividing the firmware, and the audio signal included in the HDMI signal may be converted into the plurality of pieces of divided data generated by dividing the setting information by the display apparatus.

Subsequently, the display apparatus may update the pre-stored firmware and setting information by using the converted divided data in S950.

Meanwhile, if it is determined that the received HDMI signal does not include the firmware file and the setting information file in S930-N, the display apparatus may determine that the received HDMI signal includes a general video signal and audio signal, and process the video signal and the audio signal in S960. Specifically, the display apparatus may process the video signal by using the equipped video processor, and process the audio signal by using the equipped audio processor.

Subsequently, the display apparatus may display the processed video signal, and output the processed audio signal in S970.

According to the exemplary embodiment described above, there is an effect that a user convenience is increased and limitations such as a cost etc. are overcome by converting a firmware file into a video signal and a setting information file into an audio signal, and transmitting the firmware file and the setting information file to the display apparatuses respectively through the loop of the plurality of display apparatuses connected through a HDMI cable or a DP cable.

Various exemplary embodiments described above may be implemented in a recording medium that may be read by a computer or a similar apparatus to the computer by using software, hardware, or a combination thereof. According to the hardware embodiment, exemplary embodiments may be implemented by using at least one selected from Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, electrical units for performing other functions. In some cases, exemplary embodiments may be embodied as the processor 120 itself. In a software embodiment, various embodiments such as a procedure and a function may be implemented as separate software modules. The software modules may respectively perform one or more functions and operations described in the exemplary embodiments.

Methods of controlling a display apparatus according to various exemplary embodiments may be stored on a non-transitory readable medium. The non-transitory readable medium may be installed and used in various devices.

The non-transitory computer readable medium is not a medium that stores data for a short moment such as a register, a cash and a memory and the like, but a medium that stores data semipermanently and which is readable by an apparatus. Specifically, programs of performing the above-described various methods can be stored in a non-transitory computer readable medium such as a CD, a DVD, a hard disk, a Blu-ray disk, universal serial bus (USB), a memory card, ROM, or the like, and can be provided.

The foregoing exemplary embodiments and advantages are merely exemplary and are not to be construed as limiting the present disclosure. The present teaching may be readily applied to other types of apparatuses. Also, the description of the exemplary embodiments of the present disclosure is intended to be illustrative, and not to limit the scope of the claims, and many alternatives, modifications, and variations will be apparent to those skilled in the art.

## Claims

1. An electronic apparatus comprising:
a transceiver; and
a processor configured to convert a firmware file to update a firmware of the display apparatus into a video signal, convert a setting information file to change a setting of the display apparatus into an audio signal, and control the transceiver to transmit the converted video signal and the converted audio signal to a display apparatus.

2. The electronic apparatus as claimed in claim 1, wherein the processor divides the firmware file and generates a plurality of pieces of divided data of the firmware file, adds respective header data to each of the plurality of pieces of divided data of the firmware file, and converts the plurality of pieces of divided data of the firmware file in which the respective header data is added, into the video signal, and
wherein the processor divides the setting information file and generates a plurality of pieces of divided data of the setting information file, adds respective header data to each of the plurality of pieces of divided data of the setting information file, and converts the plurality of pieces of divided data of the setting information file in which the respective header data is added, into the audio signal.

3. The electronic apparatus as claimed in claim 2, wherein each of the respective header data includes at least one of identification (ID) information of the display apparatus, location address information in the display apparatus in which one or more of the plurality of pieces of divided data of the setting information file and the plurality of pieces of divided data of the firmware file are to be stored, cyclical redundancy check (CRC), and a flag which displays a respective last piece of divided data.

4. The electronic apparatus as claimed in claim 2, wherein a size of the plurality of pieces of divided data of the firmware file is determined based on a resolution of the display apparatus.

5. The electronic apparatus as claimed in claim 2, wherein a size of the plurality of pieces of divided data of the setting information file is determined based on at least one of a sampling rate, a bit rate, and a number of channels.

6. The electronic apparatus as claimed in claim 1, wherein the transceiver transmits the converted video signal and the converted audio signal by using a high definition multimedia interface (HDMI) cable or a display port (DP) cable.

7. The electronic apparatus as claimed in claim 1, wherein the converted video signal is an RGB signal, and
wherein the converted audio signal is I²S or Sony and Philips digital interface (SPDIF).

8. A controlling method of an electronic apparatus comprising:
converting a firmware file to update a firmware of a display apparatus which communicates with the electronic apparatus into a video signal;
converting a setting information file to change a setting of the display apparatus into an audio signal; and
transmitting the converted video signal and the converted audio signal to the display apparatus.

9. The method as claimed in claim 8, wherein the converting into the video signal comprises:
generating a plurality of pieces of divided data by dividing the firmware file;
adding respective header data to each of the plurality of pieces of divided data of the firmware file; and
converting the plurality of pieces of divided data of the firmware file, in which the respective header data is added, into the video signal, and
wherein the converting into the audio signal comprises:
generating a plurality of pieces of divided data by dividing the setting information file;
adding respective header data to each of the plurality of pieces of divided data of the setting information; and
converting the plurality of pieces of divided data of the setting information, in which the respective header data is added, into the audio signal.

10. The method as claimed in claim 9, wherein each of the respective header data includes at least one of ID information of the display apparatus, location address information in the display apparatus in which one or more plurality of pieces of divided data of the setting information file and the plurality of pieces of divided data of the firmware file are to be stored, CRC, and a flag which displays a respective last piece of divided data.

11. The method as claimed in claim 9, wherein a size of the plurality of pieces of divided data of the firmware file is determined based on a resolution of the display apparatus.

12. The method as claimed in claim 9, wherein a size of the plurality of pieces of divided data of the setting information file is determined based on at least one of a sampling rate, a bit rate, and the number of channels.

13. The method as claimed in claim 8, wherein the transmitting transmits through a HDMI cable or a DP cable.

14. The method as claimed in claim 8, wherein the converted video signal is an RGB signal, and
wherein the converted audio signal is I²S or SPDIF.
